**Europäisches Patentamt**

(19) **European Patent Office**

**Office européen des brevets**

(11) Numéro de publication : **0 239 067 B1**

(12) **FASCICULE DE BREVET EUROPEEN**

(45) Date de publication du fascicule du brevet :
**12.06.91 Bulletin 91/24**

(51) Int. Cl.⁵ : **H01B 19/00, B29C 45/42, B29C 37/00**

(21) Numéro de dépôt : **87104298.2**

(22) Date de dépôt : **24.03.87**

(54) Dispositif de demoulage d'un isolateur electrique composite.

(30) Priorité : **25.03.86 FR 8604279**

(43) Date de publication de la demande :
**30.09.87 Bulletin 87/40**

(45) Mention de la délivrance du brevet :
**12.06.91 Bulletin 91/24**

(84) Etats contractants désignés :
**AT BE CH DE ES FR GB GR IT LI LU NL SE**

(56) Documents cités :
**EP-A- 0 083 766**
**EP-A- 0 120 787**

(73) Titulaire : **SEDIVER, SOCIETE EUROPEENNE D'ISOLATEURS EN VERRE ET COMPOSITE**
**10 quai Paul-Doumer**
**F-92411 Courbevoie (FR)**

(72) Inventeur : **Gissinger, Patrick**
**Les Profins Route de Busset**
**Mariol F-03270 Saint Yorre (FR)**
Inventeur : **Poutignat, Yves**
**58, rue Emile Zola**
**F-63270 Puy Guillaume (DE)**

(74) Mandataire : **Weinmiller, Jürgen et al**
**Lennéstrasse 9 Postfach 24**
**W-8133 Feldafing (DE)**

**Description**

La présente invention concerne un dispositif de démoulage d'un isolateur électrique composite. Un tel isolateur comporte par exemple un jonc central à base de fibres de verre imprégnées d'une résine synthétique, et recouvert d'un revêtement à ailettes en matériau élastomère, par exemple de type EPDM.

On sait réaliser des isolateurs de ce genre, pouvant présenter des longueurs de plusieurs mètres, dont le revêtement est moulé dans une presse directement sur le jonc. La presse comporte un demi-moule inférieur et un demi-moule supérieur. Lorsque le revêtement a été moulé, le demi-moule supérieur s'élève et le problème est de sortir du demi-moule inférieur le jonc muni de ses ailettes encore chaudes, constituant un ensemble très souple et facilement déchirable.

Jusqu'à présent l'opération de sortie était menée par deux opérateurs saisissant chacun une extrémité du jonc ; ceci entraîne des risques de flambage du jonc et des efforts parasites entre le jonc et ses ailettes. Le problème est bien entendu extrêmement critique pour des isolateurs dont la longueur peut aller jusqu'à plusieurs mètres.

La présente invention a pour but d'éviter ces inconvénients et de sortir des isolateurs composites de grande longueur de leurs moules sans risque d'abimer leurs ailettes.

La présente invention a pour objet un dispositif de démoulage d'un isolateur composite comportant un jonc central et un revêtement à ailettes en élastomère, ledit revêtement étant moulé dans une presse comportant un demi-moule inférieur et un demi-moule supérieur. Il comporte un bâti mobile en translation par rapport à ladite presse sur des guides parallèles à l'axe du jonc ; ce bâti comprend une poutre porteuse supportant un vérin et une poutre parallèle à la poutre porteuse et mobile en translation verticale par l'intermédiaire du vérin ; la poutre mobile est munie d'une pluralité de modules de préhension par pincement de quelques-unes desdites ailettes, chaque module possédant une pièce d'appui pour une portion de face d'une ailette et une pièce présentant un logement pour un joint gonflable destiné à s'appliquer sur la portion correspondante de l'autre face de ladite ailette.

La pièce d'appui est avantageusement une pièce métallique ayant un profil correspondant à celui de l'ailette concernée. Mais cette pièce peut également être du même type que la pièce à joint gonflable avec laquelle elle coopère pour pincer l'ailette.

Le joint gonflable est avantageusement en silicone car il doit résister à la température régnant dans le moule, c'est-à-dire une température de l'ordre de 180°C.

La face du joint destinée à venir en contact avec la face de l'ailette présente avantageusement des stries.

La pression à l'intérieur du joint gonflable au moment du pincement de l'ailette est de l'ordre de trois bars.

D'autres caractéristiques et avantages de la présente invention apparaîtront au cours de la description suivante d'un mode de réalisation donné à titre illustratif mais nullement limitatif.

Dans le dessin annexé très schématique :

– La figure 1 est une vue de l'ensemble de la presse, le demi-moule supérieur étant levé, l'isolateur se trouvant encore dans le demi-moule inférieur.

– La figure 2 montre l'isolateur de la figure 1 pris en charge par un dispositif de démoulage selon l'invention.

– La figure 3 montre en coupe partielle un élément du dispositif de démoulage selon l'invention correspondant a la lucarne III de la figure 1.

– La figure 4 est une vue de côté de l'installation montrée à la figure 1, le dispositif de préhension étant baissé.

– La figure 5 montre une vue de côté analogue à celle de la figure 4, le dispositif de préhension étant levé.

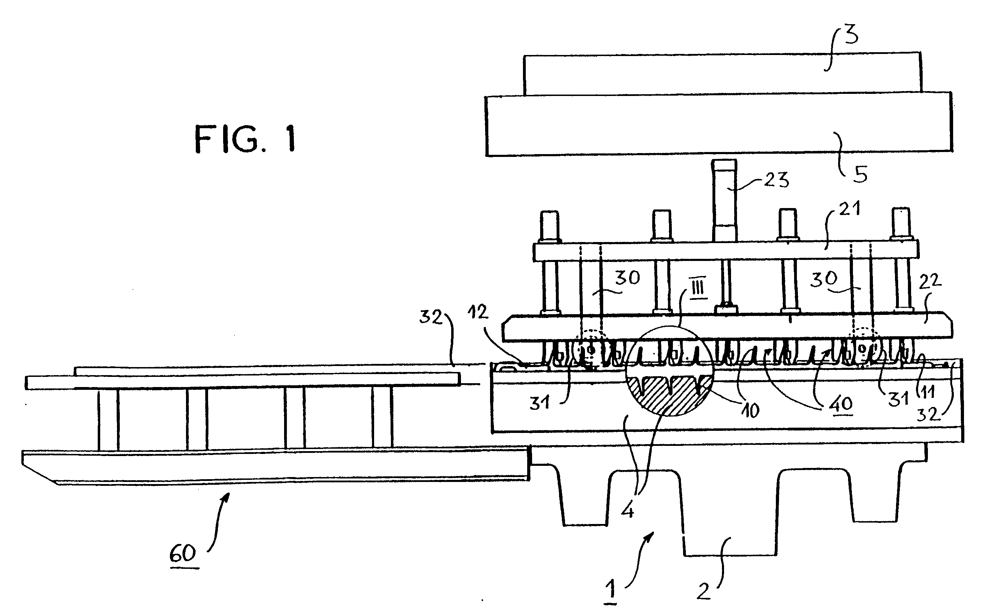

On voit dans la figure 1 une presse 1 comprenant schématiquement une traverse 2 supportant un demi-moule inférieur 4 et une traverse 3 supportant un demi-moule supérieur 5. Dans la position illustrée, on a réalisé l'opération de moulage des ailettes 10 de l'isolateur 13 dont on aperçoit les ferrures d'extrémité 11 et 12. Le demi-moule supérieur 5 a été levé et le dispositif de démoulage selon l'invention est en place.

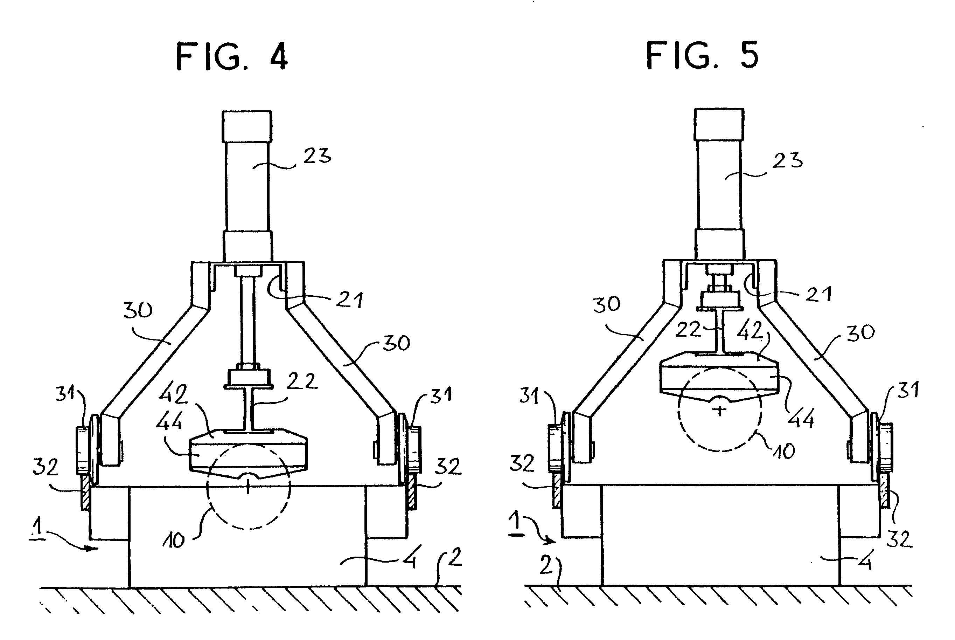

Comme cela est visible dans les figures 1 et 4, ce dispositif comporte une poutre porteuse 21 supportant une poutre mobile 22, cette dernière étant susceptible d'un mouvement vertical grâce à la mise en oeuvre d'un vérin pneumatique 23.

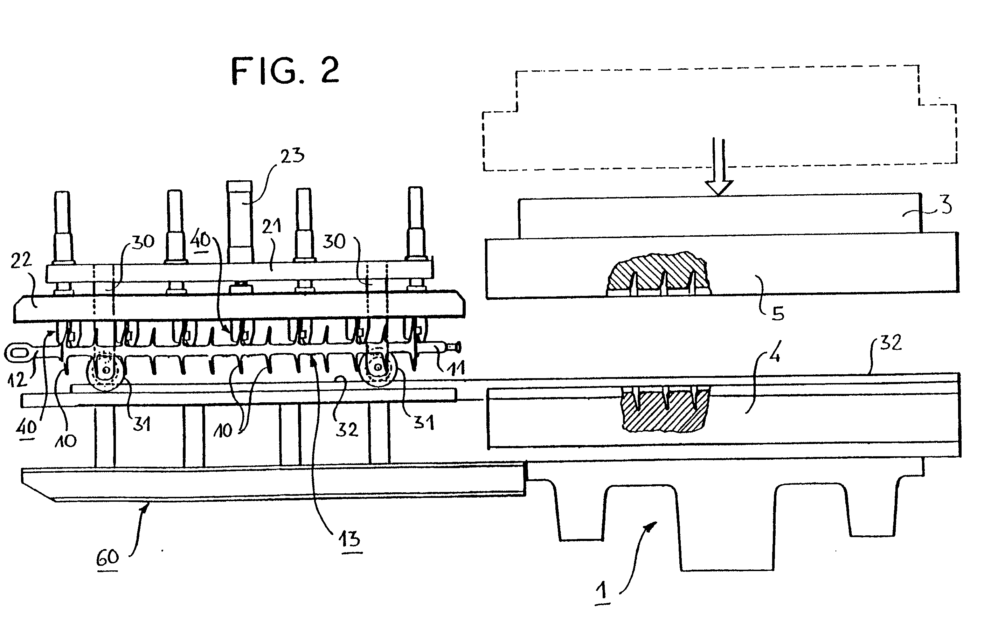

Des poutres latérales 30 solidaires de la poutre porteuse 21 sont munies de roulettes 31 coopérant avec des rails de guidage en translation horizontale 32 solidaires du bâti de la presse. Comme cela est visible sur la figure 2, les rails de guidage 32 se prolongent au delà de la presse elle-même, jusqu'à un bâti de dégagement 60 où est amené l'isolateur 13 après son extraction de la presse.

Le dispositif proprement dit de préhension des ailettes comporte un ensemble de modules de préhension 40 solidaires de la poutre mobile 22.

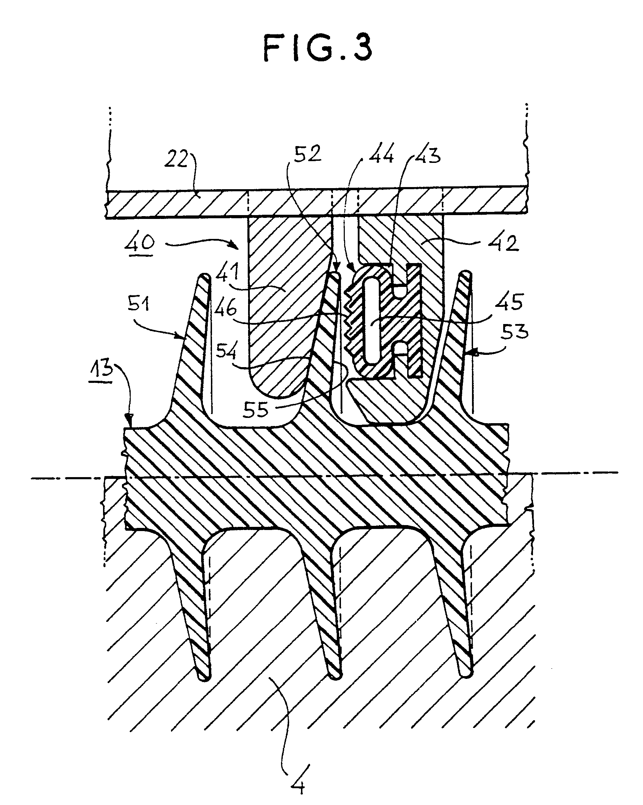

La figure 3 montre plus en détail une partie essentielle de module de préhension associé à des ailettes 51, 52, 53. Le module concerné est destiné à pincer l'ailette 52. Il comporte une première pièce métallique 41 rigide constituant un appui pour la face 54 de l'ailette 52, et une seconde pièce métallique 42 qui comporte un logement 43 pour un joint 44 en silicone pouvant résister à des températures de l'ordre de 180°C. La face 46 du joint située en regard de la face 55 de l'ailette est avantageusement striée et lorsque le joint 44 gonflable est mis sous pression, il assure le pincement de l'ailette 52. La cavité interne 45 du joint 44 est mise sous une pression de trois bars maximum.

Le dispositif de démoulage selon l'invention fonctionne de la manière suivante.

Au moment du moulage, le dispositif se trouve au niveau de l'aire de dégagement 60. Lorsque le demi-moule supérieur 5 est relevé, le revêtement est à une température de l'ordre de 180°C et il est particulièrement déformable compte tenu de son très faible module d'élasticité.

Le dispositif de préhension est amené au droit du demi-moule inférieur 4 par translation sur les rails de guidage 32.

La poutre mobile 22 munie de ses modules 40 est descendue par action du vérin pneumatique 23. Les différents modules s'intercalent entre les ailettes. On met les joints sous pression (cf. figures 1 et 4) et on applique ainsi un effort uniformément réparti sur l'isolateur 13. On remonte l'ensemble et l'isolateur 13 se trouve extrait du demi-moule 4 (cf. figure 5) sans déchirure des ailettes.

Le dispositif est ensuite guidé sur l'aire de dégagement 60 (cf. figure 2) et un autre moulage peut avoir lieu.

La poutre mobile 22 descend à nouveau ; la pression est relâchée et l'isolateur 13 est placé sur un support.

La poutre mobile est remontée pour le cycle suivant.

Lorsque l'isolateur présente des longueurs de l'ordre de 8 mètres, le moulage du revêtement peut se faire en plusieurs tronçons successifs dans la presse.

Bien entendu, l'invention n'est pas limitée au mode de réalisation qui vient d'être décrit.

Le nombre de modules 40 sur la poutre et leur répartition sont à adapter en fonction de la longueur de l'isolateur.

Les formes des pièces des modules et du joint n'ont été données qu'à titre d'exemples. Ils sont à adapter aux différentes formes d'ailettes que peut comporter un isolateur.

On peut envisager de mettre un joint gonflable de chaque coté de l'ailette à pincer.

Le dispositif selon l'invention permet d'accroître notamment la productivité sur la chaîne de production.

## Revendications

1. Dispositif de démoulage d'un isolateur composite comportant un jonc central et un revêtement à ailettes en élastomère, ledit revêtement étant moulé dans une presse (1) comportant un demi-moule inférieur (4) et un demi-moule supérieur (5), caractérisé par le fait qu'il comporte un bâti mobile en translation par rapport à ladite presse (1) sur des guides parallèles à l'axe du jonc, ledit bâti comprenant une poutre porteuse (21) supportant un vérin (23) et une poutre (22) parallèle à la poutre porteuse et mobile en translation verticale par l'intermédiaire du vérin, la poutre mobile (22) étant munie d'une pluralité de modules de préhension (40) par pincement de quelques-unes desdites ailettes, chaque module possédant une première pièce d'appui (41) pour une portion de face (54) d'une ailette (52) et une seconde pièce (42) présentant un logement (43) pour un joint gonflable (44) destiné à s'appliquer sur la portion correspondante de l'autre face (55) de ladite ailette.

2. Dispositif de démoulage selon la revendication 1, caractérisé par le fait que ledit joint est en silicone.

3. Dispositif de démoulage selon l'une des revendications 1 et 2, caractérisé par le fait que la pression à l'intérieur du joint est comprise entre 0 et 3 bars.

4. Dispositif de démoulage selon l'une des revendications précédentes, caractérisé par le fait que ladite première pièce d'appui est une pièce métallique dont le profil correspond à celui de l'ailette avec laquelle elle est en contact.

5. Dispositif de démoulage selon l'une des revendications 1 à 3, caractérisé par le fait que ladite première pièce d'appui est une pièce métallique comportant un logement muni d'un joint gonflable analogue à celui de ladite seconde pièce.

## Ansprüche

1. Vorrichtung zum Entformen eines Verbundisolators mit einem zentralen Stab und gerippter Umkleidung aus Elastomer, wobei die Umkleidung in einer Presse (1) angeformt wird, die aus einer unteren Formhälfte (4) und einer oberen Formhälfte (5) besteht, dadurch gekennzeichnet, daß die Vorrichtung ein relativ zur Presse (1) bewegliches Gerüst auf parallel zur Stabachse verlaufenden Führungen aufweist, wobei das Gerüst einen Tragbalken (21), der einen Kraftzylinder (23) trägt, und einen parallel zum Tragbalken verlaufenden weiteren Balken (22) aufweist, der mit Hilfe des Kraftzylinders in der Senkrechten verschiebbar ist, wobei der verschiebbare Balken (22) mit einer Vielzahl von Moduln (40) zum Ergreifen einzelner Rippen versehen ist und jedes Modul ein erstes Teil (41) zum Abstützen auf einem Bereich einer Seite (54) einer Rippe (53), sowie ein zweites Teil (42) mit einem Sitz (43) für eine aufblasbare Dichtung (44) aufweist, die sich auf den entsprechenden Bereich der anderen Seite (55) dieser Rippe auflegen soll.

2. Entformungsvorrichtung nach Anspruch 1, dadurch gekennzeichnet, daß die Dichtung aus Silikon besteht.

3. Entformungsvorrichtung nach einem der Ansprüche 1 und 2, dadurch gekennzeichnet, daß der Druck im Inneren der Dichtung zwischen 0 und 3 Bar liegt.

4. Entformungsvorrichtung nach einem der vorhergehenden Ansprüche, dadurch gekennzeichnet, daß das erste Abstützteil aus Metall besteht, dessen Profil demjenigen der Rippe entspricht, mit der es in Berührung steht.

5. Entformungsvorrichtung nach einem der Ansprüche 1 bis 3, dadurch gekennzeichnet, daß das erste Abstützteil aus Metall ist und einen Sitz für eine aufblasbare Dichtung entsprechend derjenigen des zweiten Stücks besitzt.

## Claims

1. A demolding device for removing from a mold a composite insulator including a central rod and a finned covering made of elastomer, said covering being molded in a press (1) which comprises a lower half-mold (4) and an upper half-mold (5), characterized in that the device is provided with a frame movable in translation relative to said press (1) on guideways parallel to the axis of the rod, said frame comprising a support beam (21) supporting a jack (23), and a beam (22) parallel to the support beam and movable in vertical translation by means of said jack, the moving beam (22) being equipped with a plurality of modules (40) for gripping a few of said fins by pinching, each module having a first bearing member (41) for applying against a portion (54) of one side of a fin (52), and a second member (42) provided with a recess (43) containing an inflatable joint (44) which is to be applied against the corresponding portion of the other side of said fin.

2. A demolding device according to claim 1, characterized in that the joint is made of silicone.

3. A demolding device according to claim 1 or 2, characterized in that the pressure inside the joint is comprised between 0 and 3 bars.

4. A demolding device according to any one of claims 1 to 3, characterized in that the first bearing member is a metallic piece, whose profile corresponds to that of the fin with which it is in contact.

5. A demolding device according to any one of claims 1 to 3, characterized in that the first bearing member is a metallic piece comprising a recess which is fitted with an inflatable joint similar to the joint of said second member.

FIG. 1

EP 0 239 067 B1

# FIG. 2

EP 0 239 067 B1

# FIG.3

FIG. 4

FIG. 5